# EUROPÄISCHE PATENTSCHRIFT

(11) **EP 1 090 883 B1**
(45) Veröffentlichungstag und Bekanntmachung des Hinweises auf die Patenterteilung: **24.09.2008**
(21) Anmeldenummer: 00120220.9
(22) Anmeldetag: 26.09.2000
(51) Int. Cl.: C01D 3/04, C25B 15/08

(54) **Verfahren zur Aufstärkung von Dünnsole in NaCl-Elektrolyseanlagen nach dem Membranverfahren**
Process for increasing the concentration of diluted brine in NaCl electrolysis plants that work along the membrane process
Procédé d'augmentation de concentration d'une saumure diluée obtenu par un dispositif d'électrolyse de NaCl par procédé membranaire

(30) Priorität: 08.10.1999 DE 19948588
(43) Veröffentlichungstag der Anmeldung: 11.04.2001
(73) Patentinhaber: Bayer MaterialScience AG, 51368 Leverkusen (DE)
(72) Erfinder: Soppe, Alfred, 47661 Issum (DE); Geisler, Klaus, Dr., 51467 Bergisch Gladbach (DE); Bressel, Bernd, Dr., 41540 Dormagen (DE)

(56) Entgegenhaltungen:
- US-A- 4 459 188
- US-A- 4 528 168
- , ULLMANN'S ENCYCLOPEDIA OF INDUSTRIAL CHEMISTRY FIFTH, COMPLETELY REVISED EDITION, 1986 , VOLUME A 6: CERAMICS TO CHLOROHYDRINS, PAGES 406 - 410 XP002252536 * Seite 409 *

## Beschreibung

Bei der Erzeugung von Chlor und Natronlauge nach dem Membranverfahren wird nahezu gesättigte NaCl-Lösung (Sole) in den Elektrolyseur geführt. Dort werden mittels Gleichstrom in die gewünschten Produkte Chlor, Natronlauge und Wasserstoff erzeugt. Dabei reduziert sich die Salzkonzentration in der Sole um 80 bis 130 g/l. Beim Elektrolysevorgang reduziert sich außerdem die in der Elektrolysezelle befindliche Solemenge um 3 bis 4 Mol H₂O je Mol erzeugter NaOH.

Um den Elektrolysevorgang aufrecht zu erhalten, muss den Zellen ständig soviel Starksole nachgeführt werden, dass die Salzkonzentration in der ablaufenden Dünnsole (Anolyt) die vom Membranhersteller geforderte Mindestkonzentration nicht unterschreitet. Diese liegt bei ca. 170 g NaCl pro Liter. Üblicherweise wird die Auszehrung der Sole bis auf 200 bis 220 g NaCl pro Liter beschränkt.

Die der Elektrolysezelle mit der Sole zugeführte Salzmenge wird somit zu ca. 40 % ausgenutzt. Die ablaufende Dünnsole wird aus ökonomischen und ökologischen Gründen recycelt, d.h. nach der Entchlorung mit festem Salz wieder aufgestärkt und nach entsprechender Reinigung der Elektrolysezelle erneut zugeführt. Vor der Aufstärkung mit kristallinem Salz wird die fehlende Wassermenge zugegeben, um die durch die Membran entweichende Flüssigkeitsmenge auszugleichen.

In herkömmlichen Sole-Aufstärkungsanlagen wird die Sole üblicherweise von unten nach oben durch Behälter (Schnellöser) mit kristallinem Salz geleitet. Dabei stärkt sich die Sole auf. Das Salz wird hierbei kontinuierlich über mechanische Fördereinrichtungen in den Schnellöser gegeben. Bei einem alternativen Verfahren wird die Dünnsole in offene Salzlager gegeben und dort aufgestärkt (Ullmann Encyclopädie der technischen Chemie; Kapitel Chlor und Natriumchlorid; Scouce, Chlorine, Reinhold Publishing Corp.; USA; 1962).

Dabei wird das Salz entweder mit automatischen Förderanlagen oder mittels Radschaufelladern einem entsprechenden Trockensalzlager entnommen.

Die aus dem Stand der Technik bekannten Verfahren sind mit einer Reihe von Nachteilen behaftet.

Wenn möglich wird der Schnellöser direkt, ohne Zwischenlagerung, aus dem Salztransportweg beschickt. Das hierbei verwendete Salz muss aber aus Gründen der Lagerfähigkeit mit Antibackmitteln (z. B. Kaliumhexacyanoferrat) dotiert werden, was zu einer Verschlechterung der Stromausbeute im Elektrolyseprozess führt (vgl. W. Versteegen, Bericht v. Akzo Nobel, Titel: Decomposition of Ironhexacyanides in alkaline Brine of Chlorin-Caustic Plants during disolution and Brine treatment, Autor: J.H.G. van der Steegen, 26.03.1990).

Offene Lösegruben führen zu salzhaltiger Schwadenbildung, die ihrerseits an den umliegenden Einrichtungen erhebliche Korrosionsschäden hervorruft. Außerdem geht hierbei durch das Entweichen von Dampf unnötig viel Wärme verloren, die danach durch Beheizung wieder zugeführt werden muss.

Außerdem sind mechanische Fördereinrichtungen zur Beschickung von Schnellösern sind dem ständigen Verschleiß unterlegen, benötigen hohen Wartungsaufwand und entsprechende personalintensive Beaufsichtigung und Bedienung.

Aus der US-A-4 528 168 ist ein Verfahren zum Speichern von Salz in einer Sole bekannt geworden, bei dem das Salz in der Sole beständig in einem Kreislauf umgepumpt wird, um das Salz in der Schwebe zu halten und zu verhindern, dass sich das Salz in Form einer Schüttung absetzt. Der Betrieb einer solchen Umpumpeinrichtung ist vergleichsweise kompliziert und wartungsintensiv.

Aus der US-A-4 459 188 ist ferner ein Verfahren zur Aufkonzentrierung einer Salzlösung bekannt geworden, das allerdings keinerlei Lösungsvorschläge hinsichtlich des Problems der Lagerung von großen, festen Salzmengen ohne die Verwendung von Antibackmitteln offenbart.

Ziel der vorliegenden Erfindung war es, ein Verfahren zur Aufstärkung von Dünnsole zur Verfügung zu stellen, dass die vorgenannten Nachteile vermeidet und:
- automatisch aus einem Lagervorrat (Silo) die Dünnsole aufstärkt
- nicht auf Antibackmittelzusätze zur Erzeugung der Lagerfähigkeit angewiesen ist,
- geringe Wärmeverluste aufweist
- große Mengen an Salz bereithält
- nicht auf mechanische Transporteinrichtungen angewiesen ist.

Trockenes oder nahezu trockenes NaCl-Salz mit einer Restfeuchte von 1 - 3 % ist jedoch nicht silierfähig, es neigt zu Brückenbildung und Verbackung und macht eine zuverlässige Ausdosierung unmöglich.

Überraschenderweise wurde gefunden, dass NaCl-Salz ohne Zusatz von Antibackmitteln in einem Silo gespeichert und von dort problemlos dosiert werden kann, wenn das NaCl-Salz mit Wasser versetzt wird, derart, dass stets ein Flüssigkeitsüberstand gewährleistet ist. Der Überstand variiert nach Silogröße und dessen geometrischer Ausgestaltung. Er ist so zu wählen, daß das Salz nicht trockenfällt. Gegebenenfalls ist Wasser während des Ausdosiervorgangs nachzuspeisen.

Die vorliegende Erfindung betrifft demnach ein Verfahren zur Aufstärkung von Dünnsole in NaCl-Elektrolyseanlagen nach dem Membranverfahren, welches dadurch gekennzeichnet ist, dass das Salz in einem Massenfluß-Silo mit Flüssigkeitüberstand gespeichert und von dort kontinuierlich dem Schnellöser oder vorzugsweise direkt dem Dünnsolestrom zugeführt wird.

Bei der vorliegenden Erfindung wird das Salz so siliert, dass die Salzschüttung mit gesättigter Sole oder Wasser überdeckt ist. Da sich bei der Entnahme der Wasser/NaCl-Salz-Mischung der Flüssigkeitsüberstand verringert, muss durch Nachfüllen von Wasser sichergestellt werden, dass ein Mindesüberstand von 20 cm erhalten bleibt.

Die überstehende Sole wird dazu benutzt, Brückenbildung zu unterdrücken und das kristalline Salz aus dem Auslaufstutzen des Silos auszuspülen. Hierbei genügen relativ kleine Flüssigkeitsmengen um das Salz auszutragen.

Das Silo ist so zu dimensionieren, dass der durch das Salz erzeugte Filterwiderstand einen Flüssigkeitsdurchfluß erzeugt, der in der Lage ist, die gewünschte Salzmenge auszudosieren. Als Silos eignen sich bevorzugt Massenfluß-Silos. Im allgemeinen besitzen Silos dieser Art folgende Dimensionen: Durchmesser 5 bis 12 m, Höhe 10 bis 25 m.

Die durch den Siloinhalt sickernde Flüssigkeitsmenge lässt sich bei Annahme eines ruhenden Feststoffes im Silo z. B. mit Hilfe bekannter Berechnungsunterlagen z.B. für die Grundwasserströmung nachweisen und größenordnungsmäßig abschätzen.

Die mathematische Berechnung zeigt, dass in einem üblichen Massenfluß-Silo auch bei feinteiligem Salz genügend Sickerflüssigkeit zum Austrag der in einer Membranelektrolyse erforderlichen Salzmenge zur Verfügung steht.

Andererseits zeigen Versuche, dass der Flüssigkeitsanteil im Austrag kleiner ist, als die im Solekreislauf benötigte Zusatzwassermenge. Dies erweist sich als vorteilhaft für das NaCl-Membranverfahren, da der Wasserzusatz auf diese Weise je nach Bedarf gesteuert werden kann.

### Beispiel

In einem 20 m³-Behälter mit konischem Boden und Auslaufstutzen werden 20 t Siedesalz ohne Antibackmittel gefüllt und so lange mit vollentsalztem Wasser überschichtet, bis die überstehende Wasserschicht ca. 20 cm beträgt.

Aus Auslaufstutzen wird eine ca. 250 g/l enthaltende Salzsole vorbeigeführt und von einer Pumpe über eine Mengen- und eine radiometrische Dichtemessung zum nächsten Prozeßschritt (Solefiltration) gedrückt.

Mit Hilfe der radiometrischen Dichtemessung wird ein Regelventil angesteuert, das soviel Salzslurry in den Solestrom eindosiert, dass eine nahezu gesättigte Sole mit einer Dichte von 1,198 g/m³ entsteht.

Nach Halbierung der verdünnten Solemenge, die aufgestärkt werden soll, ist nach ca. 90 sec wieder auf den o. a. Wert von 1,198 g/m³ eingeregelt.

Wird die Pumpenleistung wieder erhöht, stellt sich der vorgegebene Dichtewert innerhalb von 60 Sekunden erneut ein.

Bei einem mittleren Solestrom ca. 2,1 m³/h ist das Salz nach 83 h vollständig aus dem Silo ausdosiert, während die überstehende Flüssigkeit noch ein Drittel der Höhe des Auslaufkonus verdeckt.

## Patentansprüche

1. Verfahren zur Aufstärkung von Dünnsole in NaCl-Elektrolyseanlagen nach dem Membranverfahren, bei dem das erforderliche NaCl-Salz in einem Massenfluss-Silo mit Flüssigkeitsüberstand gespeichert und von dort kontinuierlich dem Schnelllöser zugeführt wird, **dadurch gekennzeichnet, dass** beim Speichern eine Salzschüttung entsteht, die mit gesättigter Sole oder Wasser überdeckt ist.

2. Verfahren gemäß Anspruch 1, **dadurch gekennzeichnet, dass** das Salz/Wasser-Gemisch direkt dem Dünnsolestrom zugeführt wird.

3. Verfahren nach Anspruch 1, **dadurch gekennzeichnet, dass** das Salz mit mechanischen Fördereinrichtungen dem Silo zugeführt wird.

4. Verfahren nach Anspruch 1, **dadurch gekennzeichnet, dass** das Salz über hydraulische Förderung in das Silo eingebracht wird.

5. Verfahren zum Speichern von NaCl-Salz in einem Silo ohne Zusatz von Antibackmitteln, wobei das erforderliche NaCl-Salz mit einem Flüssigkeitsüberstand gespeichert wird, der so zu wählen ist, dass das NaCl-Salz nicht trockenfällt und das kristalline Salz beim Austragen aus dem Auslaufstutzen des Silos ausgespült wird, **dadurch gekennzeichnet, dass** beim Speichern eine Salzschüttung entsteht, die mit gesättigter Sole oder Wasser überdeckt ist.

## Claims

1. Process for concentrating weak brine in NaCl electrolysis units operating according to the membrane method, in which the necessary NaCl salt is stored in a mass flow silo with liquid supernatant and from there is continuously added to the rapid dissolver, **characterised in that** during storage a salt bed is formed that is covered with saturated brine or water.

2. Process according to claim 1, **characterised in that** the salt/water mixture is added directly to the weak brine feed.

3. Process according to claim 1, **characterised in that** the salt is fed to the silo by mechanical conveying devices.

4. Process according to claim 1, **characterised in that** the salt is introduced into the silo by hydraulic conveyance.

5. Process for storing NaCl salt in a silo without adding anti-caking agents, wherein the necessary NaCl salt is stored with a liquid supernatant which is chosen so that the NaCl salt does not dry out and the crystalline salt is rinsed on discharge from the outflow pipe of the silo, **characterised in that** during storage a salt bed is formed that is covered with saturated brine or water.

## Revendications

1. Procédé d'augmentation de la concentration de saumure diluée dans des installations d'électrolyse de NaCl par le procédé à membrane, dans lequel le sel NaCl nécessaire est stocké dans un silo à écoulement en masse avec couche de liquide surnageant et, à partir de ce silo, amené en continu dans le dissolveur rapide, **caractérisé en ce que** le stockage donne un chargement de sel qui est recouvert de saumure saturée ou d'eau.

2. Procédé selon la revendication 1, **caractérisé en ce que** le mélange sel/eau est amené directement dans le courant de saumure diluée.

3. Procédé selon la revendication 1, **caractérisé en ce que** le sel est amené dans le silo par des dispositifs transporteurs mécaniques.

4. Procédé selon la revendication 1, **caractérisé en ce que** le sel est introduit dans le silo par manutention hydraulique.

5. Procédé de stockage de sel NaCl dans un silo sans ajout d'agents antiagglomérants, dans lequel le sel NaCl nécessaire est stocké avec une couche de liquide surnageant qui est choisie de telle façon que le sel NaCl ne se dessèche pas et le sel cristallin est purgé par le piquage de décharge du silo lors de l'extraction, **caractérisé en ce que** le stockage donne un chargement de sel qui est recouvert de saumure saturée ou d'eau.
